# FASCICULE DE BREVET EUROPEEN

(11) **EP 0 757 955 B1**
(45) Date de publication et mention de la délivrance du brevet: **17.11.1999**
(21) Numéro de dépôt: 96401648.9
(22) Date de dépôt: 24.07.1996
(51) Int. Cl.: B64C 13/30, B64C 9/10

(54) **Système pour commander une gouverne articulée sur une structure d'un véhicule**
System zur Steuerung eines an einer Fahrzeugstruktur angelenkten Steuerruders
System for controlling an aerodynamic surface hinged on a vehicle structure

(30) Priorité: 08.08.1995 FR 9509605
(43) Date de publication de la demande: 12.02.1997
(73) Titulaire: AEROSPATIALE SOCIETE NATIONALE INDUSTRIELLE, 75016 Paris (FR)
(72) Inventeur: Dazet, Francis, 31140 Saint Alban (FR)
(74) Mandataire: Bonnetat, Christian

(56) Documents cités:
- FR-A- 2 600 035
- US-A- 2 577 439
- US-A- 3 369 781

## Description

La présente invention concerne une gouverne articulée sur une structure d'un véhicule et un système de commande de ladite gouverne.

Dans une application préférentielle, l'invention est destinée à être utilisée sur des aéronefs, tels que des avions sans servocommandes, pour permettre la manoeuvre de surfaces aérodynamiques, telles que gouvernes latérales, de profondeur et de direction reliées au bord de fuite des ailes et des empennages concernés horizontal et vertical, et ainsi diriger l'avion selon la trajectoire souhaitée. Aussi, le système sera décrit ci-après en regard de cette application, mais il pourrait bien entendu être monté sur d'autres véhicules tels que des navires comme les sous-marins, sans sortir du cadre de l'invention.

On sait que sur les avions dépourvus de servocommandes, les systèmes de commande de certaines gouvernes sont conçus de façon à réduire l'effort que doit exercer le pilote pour braquer la gouverne concernée dans un sens ou dans l'autre et orienter l'avion selon la trajectoire voulue. Un tel système de commande d'une gouverne articulée autour d'un premier axe fixe solidaire de la structure de l'avion, est par exemple enseigné par le brevet francais FR-2 600 035 de la Demanderesse.

En particulier, ce système comporte notamment :
- un volet compensateur articulé sur le bord de fuite de ladite gouverne autour d'un second axe, parallèle audit premier axe et lié à la gouverne ;
- des moyens élastiques de liaison prévus entre ladite gouverne et ledit volet compensateur ;
- un mécanisme de commande volontaire auquel sont reliés lesdits moyens élastiques et qui est susceptible d'agir sur ledit volet compensateur pour provoquer son braquage dans un sens, et, par conséquent, le braquage simultané de la gouverne dans l'autre sens ; et
- un organe d'actionnement prévu entre ladite gouverne et lesdits moyens de liaison, susceptible de maintenir l'ensemble volet-gouverne en une quelconque position imposée par ledit mécanisme de commande volontaire.

Ainsi, lorsque le pilote agit sur le mécanisme de commande volontaire (constitué notamment d'un palonnier à pédales et d'une timonerie), le volet compensateur (de faible dimension comparativement à la gouverne) est braqué et pivote autour du second axe dans le sens choisi, et les moyens élastiques de liaison sont déformés. Sous l'action des forces aérodynamiques agissant sur le volet compensateur alors braqué et sous l'action des moyens élastiques, la gouverne prend alors la position braquée en pivotant dans l'autre sens autour du premier axe d'articulation. Si le pilote désire maintenir la nouvelle position braquée de l'ensemble volet-gouverne, il commande l'organe d'actionnement qui maintient ladite position durant le temps nécessaire à la manoeuvre de sorte que, puisque la gouverne est en position d'équilibrage aérodynamique, le pilote peut relâcher son effort sur le mécanisme de commande volontaire.

Bien qu'il assure avec efficacité les fonctions de compensateur à ressort et d'équilibrage, ce système de commande présente néanmoins certains aspects négatifs.

En effet, dans ce système connu, comme d'ailleurs dans la plupart des systèmes de ce type, les moyens élastiques de liaison et l'organe d'actionnement (respectivement sous la forme d'un ressort hélicoïdal et d'un vérin), notamment, sont disposés transversalement à l'axe d'articulation de la gouverne, c'est-à-dire à l'intérieur de celle-ci, en direction de son bord de fuite, pour des raisons inhérentes à son fonctionnement. De la sorte, puisque ce sont des pièces pesantes, le centre de gravité de la gouverne se trouve éloigné de l'axe d'articulation en direction du bord de fuite, si bien que les conditions d'équilibre de la gouverne ne sont pas remplies.

Aussi, pour essayer de ramener le centre de gravité vers l'axe d'articulation et, donc, d'équilibrer davantage la gouverne, on peut prévoit des masselottes d'équilibrage au niveau de l'axe d'articulation, mais alors cela accroît la masse de la gouverne et sollicite encore plus son articulation.

Par ailleurs, la disposition transversale des moyens élastiques, organe d'actionnement et autres leviers de manoeuvre, conduit à ménager des ouvertures dans les cloisons et longerons structuraux de la gouverne, ainsi que dans les revêtements de surface, si bien que sa rigidité s'en trouve affectée.

La présente invention a pour but de pallier ces inconvénients.

A cet effet, la gouverne pour être articulée sur une structure d'un véhicule autour d'un premier axe fixe lié à ladite structure et le système du type décrit ci-dessus pour commander ladite gouverne sont caractérisés, selon l'invention :
- en ce que ledit système comprend un organe mécanique intermédiaire, actionné par ledit mécanisme de commande volontaire et actionnant une première bielle reliée auxdits moyens élastiques, une seconde bielle reliée audit volet compensateur et un bras relié à la gouverne ;
- en ce que lesdits moyens élastiques de liaison sont formés par au moins un ressort à lame qui est monté pivotant autour d'un axe lié à la gouverne, et qui est relié, à ses extrémités respectives, audit organe d'actionnement et à ladite première bielle ; et
- en ce que lesdits moyens élastiques de liaison et ledit organe d'actionnement sont disposés de façon au moins sensiblement parallèle audit premier axe d'articulation de la gouverne, en étant situés au voisinage et en amont de celui-ci.

Ainsi, la disposition des moyens élastiques de liaison et de l'organe d'actionnement, parallèlement et proche de l'axe d'articulation de la gouverne, a pour avantage de rapprocher le centre de gravité de la gouverne vers son axe d'articulation, ce qui assure un meilleur équilibrage de celle-ci et réduit notablement l'importance des masselottes d'équilibrage. Par ailleurs, une telle disposition des moyens élastiques et de l'organe d'actionnement longeant le bord d'attaque de la gouverne, supprime la plupart des ouvertures usuellement nécessaires pour le passage des moyens élastiques, organe d'actionnement et autres leviers lors d'un montage du système transversalement à la gouverne, ce qui permet de conserver sa rigidité. Avantageusement, l'organe mécanique intermédiaire est alors indépendant de la gouverne et évite une liaison directe de celle-ci en minimisant les efforts s'exerçant sur son axe d'articulation lorsqu'elle est actionnée via ledit système.

En particulier, ledit organe d'actionnement peut être constitué par un vérin dont le corps est articulé autour d'un axe, sur ladite gouverne, et dont la tige est reliée auxdits moyens élastiques de liaison.

Par ailleurs, entre ledit vérin et ledit ressort à lame, sont prévus un levier coudé et une manille articulés l'un à l'autre autour d'un axe, ledit ressort étant lié à ladite manille par un axe, tandis que ledit levier est articulé sur la gouverne, au niveau de son coude, et sur la tige dudit vérin, par des axes respectifs. Ainsi, ledit vérin peut maintenir en position l'une des extrémités du ressort à lame, tandis que son autre extrémité est sollicitée par l'action du pilote via le mécanisme de commande volontaire, l'organe intermédiaire et la première bielle, lors d'un braquage de l'ensemble volet-gouverne, et permettre au pilote de relâcher son effort de braquage s'il souhaite poursuivre cette phase de vol, en modifiant la position de cette extrémité du ressort qui pivote autour de son axe d'articulation lié à la gouverne.

En outre, lesdits axes d'articulation dudit vérin, dudit ressort à lame, dudit levier coudé et de la manille sont parallèles entre eux et orthogonaux au premier axe d'articulation de ladite gouverne.

Avantageusement, ledit ressort à lame est monté pivotant sur ladite gouverne par l'intermédiaire d'une pièce montée de façon réglable par rapport à la gouverne et portant ledit axe d'articulation dudit ressort. Cet agencement permet ainsi de régler aisément au sol les moyens élastiques de liaison.

En ce qui concerne ledit organe mécanique intermédiaire, ce dernier est lié au mécanisme de commande volontaire, aux première et seconde bielles et au bras, respectivement autour d'axes parallèles entre eux et au premier axe d'articulation de ladite gouverne.

Par exemple, ledit organe mécanique intermédiaire peut être situé en bout de ladite gouverne. Bien évidemment, un capot peut recouvrir l'organe alors en saillie, pour être relié à ladite gouverne.

De plus, ladite seconde bielle est reliée audit volet par l'intermédiaire d'un levier sur lequel s'articule ladite seconde bielle et qui est associé, de façon réglable, audit volet. On peut ainsi régler précisément sa position par rapport au volet compensateur.

Les figures du dessin annexé feront bien comprendre comment l'invention peut être réalisée. Sur ces figures, des références identiques désignent des éléments semblables.
La figure 1 représente en perspective un avion dont la commande des gouvernes représentées est réalisée par le système de l'invention.
La figure 2 est une vue en perspective schématique du système conforme à l'invention, apte à commander l'une des gouvernes latérales dudit aéronef.
La figure 3 est une vue en bout dudit système de commande montré sur la figure 2.
La figure 4 est une vue en plan des moyens élastiques et de l'organe d'actionnement dudit système montré sur la figure 2.
La figure 5 est une vue desdits moyens élastiques selon la flèche F de la figure 4.

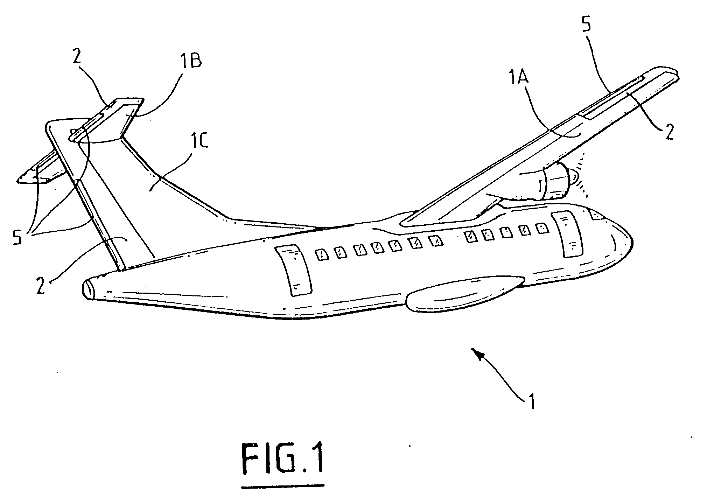

L'avion 1 représenté sur la figure 1 et dénommé "commuter" par les spécialistes, comprend des gouvernes ou surfaces aérodynamiques 2, respectivement articulées à l'arrière de ses ailes 1A, de son empennage horizontal 1B et de son empennage vertical 1C, afin d'assurer le contrôle de l'avion autour des axes de référence de roulis, de tangage et de lacet, selon la trajectoire souhaitée. Ce type d'avion 1, comme le sont d'ailleurs la plupart des avions à faible capacité de transport, est dépourvu de servocommandes, si bien que les gouvernes sont actionnées à partir de systèmes mécaniques manoeuvrés directement par le pilote.

On décrira ci-après le système 3 de l'invention destiné à commander la gouverne 2 située dans ce cas en bout de l'aile 1A de l'avion, étant entendu que des systèmes analogues agissent sur les autres gouvernes précitées.

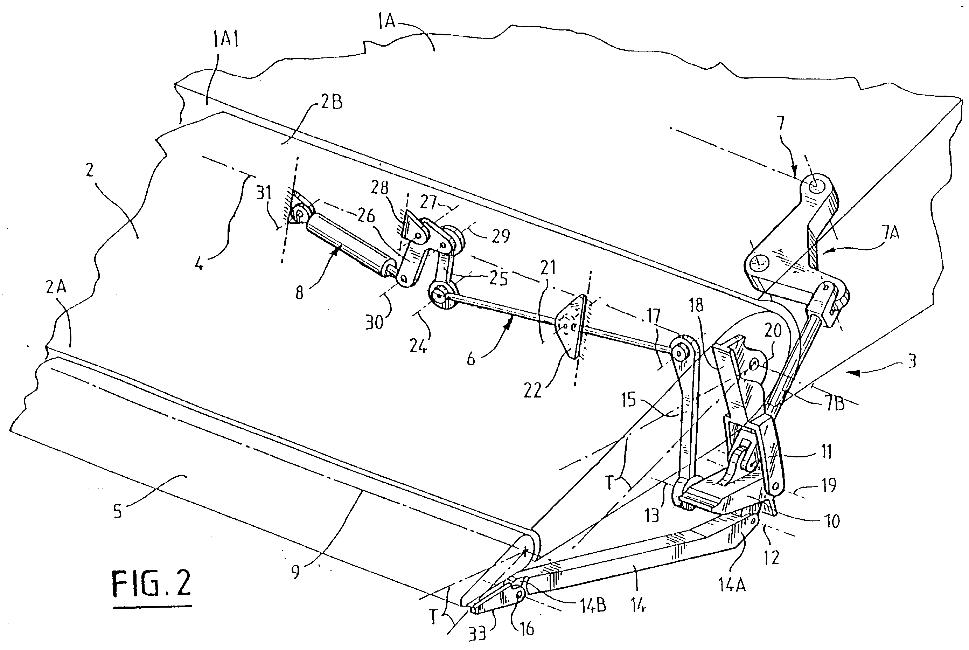

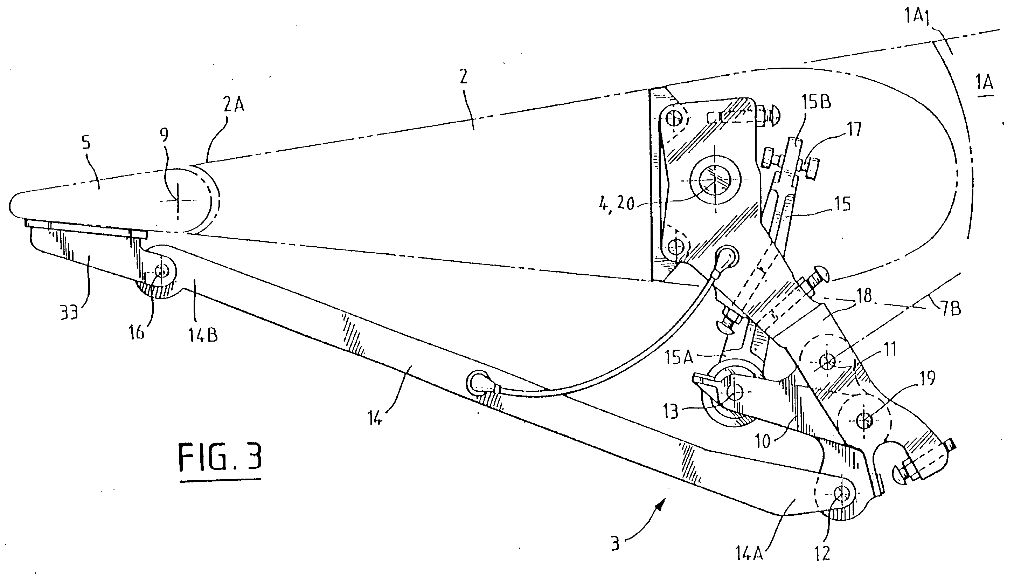

Comme le montrent notamment les figures 2 et 3, la gouverne 2 est montée mobile sur la partie arrière 1A1 de l'aile 1A autour d'un axe 4 définissant un premier axe de braquage 4 de la gouverne pour le système 3. Celui-ci se compose principalement d'un volet compensateur 5, de moyens élastiques de liaison 6, d'un mécanisme de commande volontaire 7 et d'un organe d'actionnement 8.

En particulier, le volet compensateur 5 du système de commande 3 est articulé sur le bord de fuite 2A de la gouverne autour d'un second axe 9, parallèle au premier axe 4 et lié à la gouverne 2. Ce volet 5, dont le but est de réduire les efforts de manoeuvre que le pilote doit exercer sur la gouverne 2 pour obtenir son braquage, est alors directement actionné par le pilote via le mécanisme de commande volontaire 7 dont seule l'extrémité aval de la timonerie 7A est représentée sur les figures. Ce mécanisme 7 comprend en amont de la timonerie, par exemple, un palonnier à pédales non illustré et sur lequel le pilote peut agir pour obtenir, par l'intermédiaire du volet 5, le braquage de la gouverne 2 dans un sens ou dans l'autre.

Les moyens élastiques de liaison 6 sont du type à ressort et sont prévus entre la gouverne 2 et le volet compensateur 5 en étant reliés au mécanisme de commande volontaire 7. Le braquage de la gouverne 2 autour du premier axe 4 est obtenu par la commande du volet 5 autour du second axe 9, au moyen du mécanisme 7, et par les moyens élastiques 6 qui permettent au pilote de "ressentir" l'effort qu'il est en train d'exercer.

L'organe d'actionnement 8 est agencé entre la gouverne 2 et les moyens élastiques de liaison 6 et il est défini, par exemple, par un vérin 8A. Cet organe 8, lorsqu'il est commandé, maintient en équilibre l'ensemble volet-gouverne dans une quelconque position braquée, ce qui permet à l'avion 1 de conserver le cap imposé par l'action du pilote, et éventuellement à ce dernier de relâcher son effort de commande, durant le temps nécessaire à cette phase de vol.

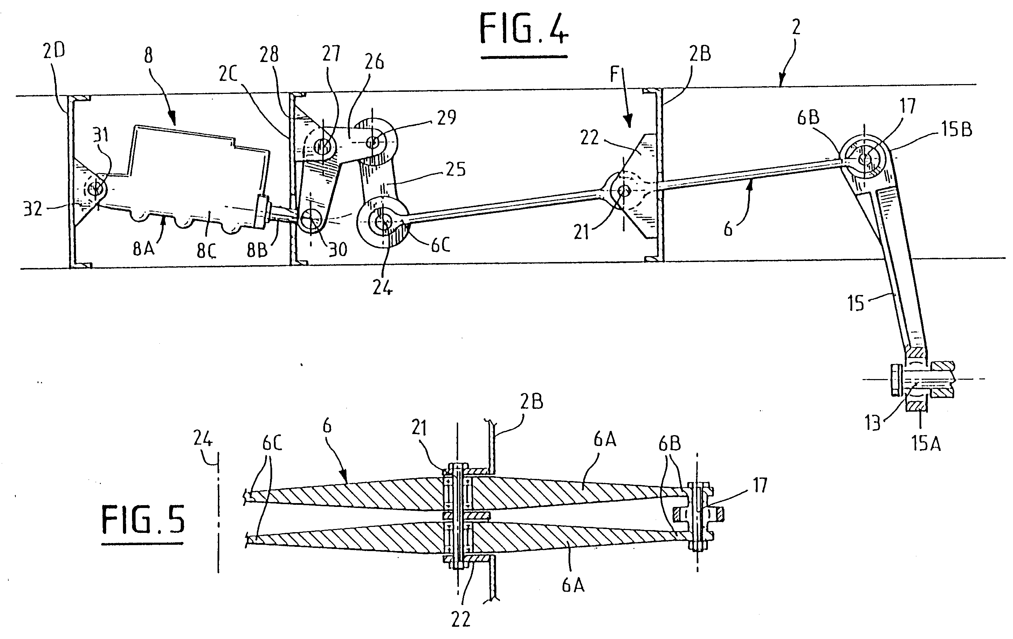

Comme le montrent notamment les figures 2 et 4, les moyens élastiques de liaison 6 et l'organe d'actionnement 8 sont logés à l'intérieur de la gouverne 2 et sont disposés de façon au moins sensiblement parallèle au premier axe d'articulation 4. Ils sont sensiblement alignés et avantageusement situés au voisinage dudit premier axe, entre ce dernier et la partie arrière 1A1 de l'aile, c'est-à-dire du côté du bord d'attaque 2B de la gouverne. Par cette disposition, le centre de gravité de la gouverne 2 se trouve rapproché de son axe d'articulation 4 contribuant ainsi à équilibrer davantage celle-ci et à réduire les efforts de manoeuvre s'exerçant sur son axe. De plus, un organe mécanique intermédiaire 10 est agencé entre ledit mécanisme 7 et les volet 5 et gouverne 2, et il permet d'assurer l'actionnement du volet 5 et des moyens élastiques 6 sans agir directement sur la gouverne. Cet organe est ainsi indépendant de la gouverne 2.

Structurellement, comme le montrent les figures 2 et 3, l'organe mécanique intermédiaire 10 est relié à un levier 7B formant l'extrémité aval de la timonerie 7A, autour d'un axe 11 parallèle au premier axe d'articulation 4 de la gouverne 2. Par ailleurs, à cet organe 10 sont articulées, autour d'axes 12 et 13, les extrémités 15A et 14A d'une première et d'une seconde bielles 15 et 14 respectivement. Les autres extrémités opposées 14B, 15B de celles-ci sont articulées, autour d'axes 16 et 17, respectivement au volet compensateur 5 et aux moyens élastiques de liaison 6. Enfin, l'organe mécanique 10 est relié à la gouverne 2 par un bras 18 dont les extrémités opposées sont montées respectivement sur ledit organe et sur la structure de la gouverne par des axes respectivement 19 et 20.

D'une façon générale, les axes précités sont de préférence à articulation sphérique, et les axes 12, 13 et 19 notamment sont parallèles entre eux, ainsi qu'aux autres axes 4, 9 et 11, l'axe 20 coïncidant avec l'axe 4.

Lorsque le mécanisme de commande volontaire 7 est manoeuvré, l'organe mécanique 10 est actionné et, simultanément, il actionne à son tour les bielles 14 et 15 et le bras 18 qui pivote autour de la gouverne 2.

En ce qui concerne les moyens élastiques de liaison 6, ils sont définis, dans cet exemple de réalisation montré sur les figures 4 et 5, par deux ressorts à lame 6A, disposés en parallèle l'un par rapport à l'autre et identiques. Ces deux ressorts à lame 6A sont montés de façon pivotante sensiblement en leur milieu, autour d'un axe 21 porté par une pièce formant palier 22 qui est fixée, de façon réglable en position, sur une cloison interne 2B de la structure de la gouverne 2. Ainsi, on peut ajuster la position des ressorts, au sol, par le réglage de la pièce 22. Plus particulièrement, les premières extrémités 6B des deux ressorts sont agencées sur l'axe 17 qui supporte également l'extrémité 15B de la seconde bielle 15 via une articulation sphérique. Et les secondes extrémités 6C des deux ressorts sont montées sur un axe 24 qui supporte également une manille ou biellette 25. Ces axes 21, 23 et 24 sont parallèles entre eux et sensiblement orthogonaux aux axes d'articulation de la gouverne 2 et de l'organe mécanique intermédiaire 10. On notera que les axes 13 et 17 liés à la bielle 15 sont orthogonaux entre eux.

La manille 25, ainsi qu'une pièce coudée en L 26, assurent la liaison entre les deux ressorts à lame 6A et le vérin 8A de l'organe d'actionnement. On remarque notamment sur les figures 1 et 4, que le coude de la pièce 26 est lié par un axe 27 à un palier 28 solidaire d'une cloison interne 2C de la gouverne.

L'une des extrémités de la pièce coudée 26 est liée, par l'intermédiaire d'un axe 29, à l'extrémité de la manille 25, opposée à celle liée à l'axe 24, tandis que l'autre extrémité de ladite pièce 26 est montée, via un axe 30, en bout de la tige 8B du vérin 8A. Bien évidemment, les axes 27, 29 et 30 sont parallèles aux axes 17, 21 et 24. Le corps 8C du vérin est porté, via un axe 31 parallèle aux précédents, par un palier 32 solidaire d'une cloison interne 2D de la gouverne, parallèle aux cloisons 2B, 2C.

On voit ainsi sur les figures 1 et 4, que le vérin 8A, la pièce coudée 26, la manille 25 et les ressorts à lame 6A sont sensiblement alignés et disposés dans un même plan, parallèle et proche de l'axe d'articulation de la gouverne 2.

Par ailleurs, l'extrémité 14B de la première bielle 14 est montée, par l'intermédiaire de l'axe 16, sur un levier 33 qui est fixé, de façon réglable, au volet compensateur 5, ce qui permet de pouvoir régler, au sol, les positions et mouvements souhaités du système et du volet.

Le fonctionnement du système de commande 3 s'effectue de la façon suivante.

Tout d'abord, on suppose que la gouverne 2 et le volet compensateur 5 se trouvent dans le prolongement l'un de l'autre, sensiblement dans le même plan que l'aile 1A, comme le montrent les figures 2 et 3. On suppose que la position de l'ensemble est maintenue en équilibre par l'action du vérin de commande 8A.

Lorsque le pilote désire modifier la trajectoire de l'aéronef, le levier 7B de la timonerie commandée par le pilote attaque l'organe mécanique intermédiaire 10 via l'axe 11, et lui imprime un mouvement de rotation autour de l'axe 19. Ce mouvement de rotation, correspondant à un déplacement angulaire donné, dudit organe mécanique 10 entraîne un déplacement de la seconde bielle 14 par l'intermédiaire de l'axe 12, ce qui se traduit par la rotation d'un angle donné du volet compensateur 5 autour du second axe d'articulation 9, par l'intermédiaire de l'axe 16 et du levier 33. La rotation du volet s'effectue dans un sens ou dans l'autre selon que la bielle 14 tire ou pousse le volet, par suite de l'actionnement de la timonerie et de la rotation de l'organe 10.

Simultanément à la rotation du volet compensateur 5, l'organe mécanique 10 en tournant autour de l'axe 19 fait déplacer angulairement l'axe 13, si bien que la première bielle 15 agit, par l'intermédiaire de l'axe 17, sur les ressorts à lame 6A qui se déforment élastiquement. L'axe 24, portant les extrémités 6C des ressorts, est maintenu en position par la manille 25 et le levier 26, ce dernier étant lié à la gouverne et immobilisé par le vérin 8A.

Sous l'action des forces aérodynamiques s'exerçant sur le volet 5 et sous l'action des ressorts 6A, la gouverne 2 prend alors la nouvelle position braquée imposée par le pilote, en pivotant autour de son axe 4 dans un sens opposé à celui du volet compensateur 5. Les traits mixtes T sur la figure 2 illustrent les positions angulaires maximales susceptibles d'être occupées par le volet et la gouverne.

Si le pilote souhaite maintenir l'avion 1 sur la nouvelle trajectoire ainsi établie et relâcher son effort sur le mécanisme de commande volontaire 7, il peut commander le vérin 8A dont la tige 8B fait pivoter le levier coudé 26 autour de son axe 27 qui, à son tour et via la manille 25, entraîne le déplacement de l'axe 24 relié aux extrémités 6C des ressorts jusqu'à ce que ces derniers ne soient plus sollicités.

L'équilibrage de l'ensemble alors braqué gouverne-volet est assuré, et le pilote peut relâcher son effort sur le mécanisme d'actionnement volontaire, durant le temps nécessaire à cette phase de vol.

Un capot, non représenté sur les figures, peut bien entendu recouvrir les composants dudit système faisant saillie de la gouverne.

## Revendications

1. Une gouverne pour être articulée sur une structure d'un véhicule, tel qu'un aéronef, autour d'un premier axe fixe lié à ladite structure, et un système pour commander ladite gouverne comportant :
- un volet compensateur (5) articulé sur le bord de fuite de ladite gouverne autour d'un second axe (9), parallèle audit premier axe (4) et lié à la gouverne (2) ;
- des moyens élastiques de liaison (6) prévus entre ladite gouverne et ledit volet compensateur ;
- un mécanisme de commande volontaire (7) auquel sont reliés lesdits moyens élastiques et qui est susceptible d'agir sur ledit volet compensateur pour provoquer son braquage dans un sens, et, par conséquent, le braquage simultané de la gouverne dans l'autre sens ; et
- un organe d'actionnement (8) prévu entre ladite gouverne et lesdits moyens de liaison, susceptible de maintenir l'ensemble volet-gouverne en une quelconque position imposée par ledit mécanisme de commande volontaire,
caractérisés :
- en ce que ledit système comprend un organe mécanique intermédiaire (10), actionné par ledit mécanisme de commande volontaire (7) et actionnant une première bielle (15) reliée auxdits moyens élastiques, une seconde bielle (14) reliée audit volet compensateur et un bras (18) relié à la gouverne ;
- en ce que lesdits moyens élastiques de liaison (6) sont formés par au moins un ressort à lame (6A) qui est monté pivotant autour d'un axe (21) lié à la gouverne, et qui est relié, à ses extrémités respectives (6C, 6B), audit organe d'actionnement (8) et à ladite première bielle (15) ; et
- en ce que lesdits moyens élastiques de liaison (6) et ledit organe d'actionnement (8) sont disposés de façon au moins sensiblement parallèle audit premier axe d'articulation (4) de la gouverne, en étant situés au voisinage et en amont de celui-ci.

2. Gouverne et système selon la revendication 1,
caractérisés en ce que ledit organe d'actionnement (8) est constitué par un vérin (8A) dont le corps (8C) est articulé autour d'un axe (31), sur ladite gouverne, et dont la tige (8B) est reliée auxdits moyens élastiques de liaison (6).

3. Gouverne et système selon l'une des revendications 1 ou 2,
caractérisés en ce que, entre ledit vérin et ledit ressort à lame, sont prévus un levier coudé (26) et une manille (25) articulés l'un à l'autre autour d'un axe (29), ledit ressort étant lié à ladite manie par un axe (24), tandis que ledit levier est articulé sur la gouverne, au niveau de son coude, et sur la tige dudit vérin, par des axes respectifs (27,30).

4. Gouverne et système selon les revendications 1 à 3,
caractérisés en ce que lesdits axes d'articulation (31, 30, 27, 29, 24, 21, 17) dudit vérin, dudit ressort à lame, dudit levier coudé et de la manille sont parallèles entre eux et orthogonaux au premier axe d'articulation (4) de ladite gouverne.

5. Gouverne et système selon l'une des revendications 1 à 4,
caractérisés en ce que ledit ressort à lame (6A) est monté pivotant sur ladite gouverne par l'intermédiaire d'une pièce (22) montée de façon réglable par rapport à la gouverne et portant ledit axe d'articulation (21) dudit ressort.

6. Gouverne et système selon l'une quelconque des revendications précédentes 1 à 5,
caractérisés en ce que ledit organe mécanique intermédiaire (10) est lié au mécanisme de commande volontaire (7), aux première et seconde bielles (15, 14) et au bras (18), respectivement autour d'axes (11, 13, 12, 19) parallèles entre eux et au premier axe d'articulation (4) de ladite gouverne.

7. Gouverne et système selon l'une quelconque des revendications précédentes 1 à 6,
caractérisés en ce que ledit organe mécanique intermédiaire (10) est situé en bout de ladite gouverne (2).

8. Gouverne et système selon l'une quelconque des revendications 1 à 7,
caractérisés en ce que ladite seconde bielle (14) est reliée audit volet (5) par l'intermédiaire d'un levier (33) sur lequel s'articule ladite seconde bielle et qui est associé, de façon réglable, audit volet.

## Claims

1. A control surface for being articulated to a structure of a vehicle, such as an aircraft, about a first fixed axis embodied by a pin linked to the said structure, and a system for controlling the said control surface including:
- a tab (5) articulated to the trailing edge of the said control surface about a second pin (of axis 9) parallel to the said first axis (4) and linked to the control surface (2);
- elastic linking means (6) provided between the said control surface and the said tab;
- a pilot input control mechanism (7) to which the said elastic means are connected and which can act on the said tab to cause it to turn in one direction and, consequently, to cause the control surface to turn simultaneously in the other direction; and
- an actuating member (8) provided between the said control surface and the said linking means, capable of keeping the tab/control surface assembly in any position whatever imposed by the said pilot input control mechanism,
characterized:
- in that the said system comprises an intermediate mechanical member (10) actuated by the said pilot input control mechanism (7) and actuating a first connecting rod (15) connected to the said elastic means, a second connecting rod (14) connected to the said tab and an arm (18) connected to the control surface;
- in that the said elastic linking means (6) are formed by at least one leaf spring (6A) which is mounted so it can pivot about a pin (of axis 21) linked to the control surface, and which is connected at its respective ends (6C, 6B) to the said actuating member (8) and to the said first connecting rod (15); and
- in that the said elastic linking means (6) and the said actuating member (8) are arranged to be at least substantially parallel to the said first axis (4) of articulation of the control surface, being situated in proximity thereto and upstream thereof.

2. Control surface and system according to Claim 1, characterized in that the said actuating member (8) consists of an actuator (8A), the body (8C) of which is articulated about an axis (31) to the said control surface, and the rod (8B) of which is connected to the said elastic linking means (6).

3. Control surface and system according to either of Claims 1 and 2, characterized in that between the said actuator and the said leaf spring there are provided a cranked lever (26) and a coupling link (25) articulated to one another about an axis (29), the said spring being linked to the said coupling link by a pin (of axis 24), whereas the said lever is articulated to the control surface, at its cranked part, and to the rod of the said actuator by respective pins (of axes 27, 30).

4. Control surface and system according to Claims 1 to 3, characterized in that the said axes (31, 30, 27, 29, 24, 21, 17) of articulation of the said actuator, of the said leaf spring, of the said cranked lever and of the coupling link are mutually parallel and are orthogonal to the first axis (4) of articulation of the said control surface.

5. Control surface and system according to one of Claims 1 to 4, characterized in that the said leaf spring (6A) is mounted so that it can pivot on the said control surface by means of a component (22) which is mounted so that it can be adjusted relative to the control surface and carrying the said articulation pin (of axis 21) for the said spring.

6. Control surface and system according to any one of the preceding Claims 1 to 5, characterized in that the said intermediate mechanical member (10) is linked to the pilot input control mechanism (7), to the first and second connecting rods (15, 14) and to the arm (18), respectively about pins (of axes 11, 13, 12, 19) which are mutually parallel and parallel to the first axis (4) of articulation of the said control surface.

7. Control surface and system according to any one of the preceding Claims 1 to 6, characterized in that the said intermediate mechanical member (10) is situated at the end of the said control surface (2).

8. Control surface and system according to any one of Claims 1 to 7, characterized in that the said second connecting rod (14) is connected to the said tab (5) via a lever (33) to which the said second connecting rod is articulated and which is associated, in an adjustable fashion, with the said tab.

## Patentansprüche

1. Steuerruder zur Anlenkung an einer Struktur eines Fahrzeugs, wie eines Luftfahrzeugs, um eine erste an dieser Struktur befestigte feste Achse, und System zur Steuerung des Steuerruders, mit:
- einer an der Hinterkante des Steuerruders um eine zweite zur ersten Achse (4) parallele Achse (9) angelenkten Ausgleichsklappe (5) und mit dem Steuerruder (2) verbunden,
- elastischen Verbindungsmitteln (6), vorgesehen zwischen dem Steuerruder und der Ausgleichsklappe,
- einem Mechanismus für die willkürliche Steuerung (7), an dem die elastische Mittel angebunden sind und der auf die Ausgleichsklappe einwirken kann, um deren Ausschlag in einer Richtung und demzufolge gleichzeitig Ausschlag des Steuerruders in der anderen Richtung zu bewirken; und
- einem zwischen dem Steuerruder und den Verbindungsmitteln vorgesehen Betätigungsorgan (8), das das Ensemble Klappe-Steuerruder in einer beliebigen Position, die durch den Mechanismus für die willkürliche Steuerung vorgegeben ist, halten kann,
dadurch gekennzeichnet, daß
- das System aufweist ein mechanisches Zwischenglied (10), betätigt durch den Mechanismus der willkürlichen Steuerung (7), das eine erste mit den elastischen Mitteln verbunde Koppel (15) betätigt, eine zweite mit der Ausgleichsklappe verbunden Koppel (14) und einen Arm (18), der mit dem Steuerruder verbunden ist;
- die elastischen Verbindungsmittel (6) durch mindestens eine Blattfeder (6A) gebildet sind, die schwenkbar um eine mit dem Steuerruder verbundene Achse (21) angebracht ist und die an ihren entsprechenden Enden (6C, 6B) mit dem Betätigungsorgan (8) und der ersten Koppel (15) verbunden ist, und
- die elastischen Verbindungsmittel (6) und das Betätigungsorgan (8) so angeordnet sind, daß sie mindestens annähernd parallel zur ersten Anlenkungsachse (4) des Steuerruders, neben und stromaufwärts derselben, angeordnet sind.

2. Steuerruder und System nach Anspruch 1, dadurch gekennzeichnet, daß das Betätigungsorgan (8) durch eine Kolben-Zylindereinheit (8A) gebildet ist, deren Zylinder (8C) um eine Achse (31) auf dem Steuerruder angelenkt ist, und deren Kolbenstange (8B) mit den elastischen Verbindungsmitteln (6) verbunden ist.

3. Steuerruder und System nach einem der Ansprüche 1 oder 2, dadurch gekennzeichnet, daß zwischen der Kolben-Zylindereinheit und der Blattfeder ein Kniehebel (26) und ein Schäkel (25) vorgesehen sind, die aneinander um eine Achse (29) angelenkt sind, die Blattfeder am Schäkel durch eine Achse (24), während der Kniehebel am Steuerruder, auf dem Niveau seiner Krümmung und auf die Stange der Kolben-Zylindereinheit, durch entsprechende Achsen (27,30) angelenkt ist.

4. Steuerruder und System nach den Ansprüchen 1 bis 3, dadurch gekennzeichnet, daß die Anlenkungsachsen (31, 30, 27, 29, 24, 21, 17) der Kolben-Zylindereinheit, der Blattfeder, des Kniehebels und des Schäkels zueinander parallel und orthogonal zur ersten Anlenkungsachse (4) des Steuerruders sind.

5. Steuerruder und System nach einem der Ansprüche 1 bis 4, dadurch gekennzeichnet, daß die Blattfeder (6A) schwenkbar auf dem Steuerruder durch ein einstellbar am Steuerruder befestigtes Teil (22), das die Anlenkungsachse (21) der Feder trägt, angebracht ist.

6. Steuerruder und System nach irgendeinem der vorangehenden Ansprüche 1 bis 5, dadurch gekennzeichnet, daß das mechanische Zwischenglied (10) mit dem Mechanismus der willkürlichen Steuerung (7), mit der ersten und zweiten Koppel (15, 14) und dem Arm (18), jeweils um zueinander parallele Achsen (11, 13, 12, 19) und mit der ersten Anlenkungsachse (4) des Steuerruders, verbunden ist.

7. Steuerruder und System nach irgendeinem der vorangehenden Ansprüche 1 bis 6, dadurch gekennzeichnet, daß das mechanische Zwischenglied (10) am Ende des Steuerruders (2) angeordnet ist.

8. Steuerruder und System nach irgendeinem der Ansprüche 1 bis 7, dadurch gekennzeichnet, daß die zweite Koppel (14) mit der Klappe (5) mittels eines Hebels (33), auf dem die zweite Koppel angelenkt ist und die regelbar mit der Klappe verbunden ist, verbunden ist.
